# EUROPÄISCHE PATENTSCHRIFT

(11) **EP 2 869 147 B1**
(45) Veröffentlichungstag und Bekanntmachung des Hinweises auf die Patenterteilung: **25.09.2019**
(21) Anmeldenummer: 14190894.7
(22) Anmeldetag: 29.10.2014
(51) Int. Cl.: G05B 19/042

(54) **Sicherheitsvorrichtung zum mehrkanaligen Verarbeiten eines analogen Eingangssignals**
Safety device for multiple channels processing of an analogue input signal
Dispositif de sécurité destiné au traitement de plusieurs canaux d'un signal d'entrée analogique

(30) Priorität: 29.10.2013 DE 102013111888
(43) Veröffentlichungstag der Anmeldung: 06.05.2015
(73) Patentinhaber: PHOENIX CONTACT GmbH & Co. KG, 32825 Blomberg (DE)
(72) Erfinder: Oster, Viktor, 32825 Blomberg (DE); Grube, Kai, 31848 Bad Münder (DE)
(74) Vertreter: Blumbach · Zinngrebe Patentanwälte PartG mbB

(56) Entgegenhaltungen:
- EP-A1- 2 090 945

## Beschreibung

Die Erfindung betrifft eine Sicherheitsvorrichtung zum mehrkanaligen Verarbeiten eines analogen Eingangssignals, die insbesondere Teil einer Automatisierungsanlage sein kann, sowie eine Eingangsschaltungsanordnung, die insbesondere zum Einsatz in einer solchen Sicherheitsvorrichtung ausgebildet ist.

In der Prozessindustrie kommen Automatisierungsanlagen zum Einsatz, bei denen Automatisierungsgeräte beispielsweise über einen Feldbus mit Sensoren und Aktoren kommunizieren, um Arbeitsvorgänge fertigungstechnischer oder verfahrenstechnischer Prozesse selbsttätig, d. h. automatisiert auszuführen. Als Automatisierungsgeräte werden beispielsweise speicherprogrammierbare Steuerungen eingesetzt, die neben digitalen Ein- und Ausgangsmodulen auch analoge Eingangs- und Ausgangsmodule enthalten können.

Analoge Eingangsmodule weisen zum Beispiel 4mA bis 20 mA-Schnittstellen auf, an welche Sensoren, zum Beispiel Temperatur- und/oder Drucksensoren angeschlossen werden können, die analoge Eingangssignale, beispielsweise elektrische Ströme zwischen 4mA bis 20 mA liefern.

Beim Einsatz in der Sicherheitstechnik ist dafür zu sorgen, dass die Automatisierungsgeräte Eingangssignale sicher erkennen können. Ferner müssen Automatisierungsgeräte in der Lage sein, Fehlfunktionen, auch im laufenden Betrieb, aufzudecken und zu erkennen.

Aus der DE 100 35 174 A1 ist eine analoge Eingabe-Schaltung für speicherprogrammierbare Steuerungen bekannt. Die Eingabe-Schaltung weist eine analoge Eingangsstufe mit einem Spannungsteiler auf, über den ein analoges Eingangssignal parallel auf zwei Kanäle gegeben wird. Durch den Spannungsteiler wird die Amplitude des Eingangssignals reduziert, sodass das reduzierte Signal vom nachgeschalteten Analog/Digital-Wandler erfasst werden kann. Die beiden Kanäle sind wahlweise an eine Peripherieschnittstelle anschaltbar, sodass ein Datenverarbeitungsblock den jeweils anderen Kanal ohne Unterbrechung des Datenflusses über den ausgewählten Kanal testen kann. Mit der bekannten Eingabe-Schaltung ist es jedoch nicht möglich, Fehler in der analogen Eingangsstufe, insbesondere fehlerhafte Widerstände des Spannungsteilers zu erkennen.

Aus der DE 10 2005 030 276 A1 ist eine Sicherheitsschaltvorrichtung bekannt, die wenigstens einen einkanaligen Eingangskreise zum Aufnehmen eines analogen Eingangssignals, einen A/D-Wandler und eine mehrkanalige Auswerte- und Steuereinrichtung aufweist. Zudem ist ein analoger Signalkombinierer vorgesehen, der dem analogen Eingangssignal ein analoges Testsignal überlagert, um ein analoges Kombinationssignal zu bilden.

Aus der DE 196 40 937 A1 ist eine Vorrichtung zur Überwachung der Messwerterfassung bei einer Motorsteuerung bekannt. Die Vorrichtung weist eine Messeinrichtung auf, die über eine Leitung mit einer Steuereinheit verbunden ist. Die Steuereinrichtung weist einen Analog/DigitalWandler auf, an dessen einen Eingang das Messsignal der Messeinrichtung zugeführt wird, und an dessen anderen Eingang verschiedene Eingangsgrößen über einen Multiplexer angeschaltet werden können. Auf diese Weise kann der A/D-Wandler diskontinuierlich überwacht werden.

Aus der EP 2 090 945 A1 ist eine Eingabebaugruppe zur Fehlererkennung bekannt. Die Eingabebaugruppe umfasst einen ersten Eingangskanal für ein erstes Messsignal und einen zweiten Eingangskanal für ein zweites Messsignal. Jedem Eingangskanal ist ein separater Multiplexer zugeordnet, wobei jeder Multiplexer mit einem ersten und einem zweiten Analog-Digital-Umsetzer verschaltet ist. Jeder Multiplexer sorgt folglich dafür, dass das jeweils angelegte Messsignal als erster Eingangswert am ersten Analog-Digital-Umsetzer und als zweiter Eingangswert am zweiten Analog-Digital-Umsetzer anliegt.

Der vorliegenden Erfindung liegt die Aufgabe zugrunde, eine Sicherheitsvorrichtung zum mehrkanaligen Verarbeiten eines analogen Eingangssignals sowie eine analoge Eingangsschaltungsanordnung zur Verfügung zu stellen, die mit einfachen und kostengünstigen Mitteln eine hohe Fehleraufdeckung innerhalb der Sicherheitsvorrichtung und insbesondere in der Eingangsschaltungsanordnung ermöglichen.

Ein Kerngedanke der Erfindung kann darin gesehen werden, eine analoge Eingangseinrichtung zu entwerfen, die bereits ab den Eingangsanschlüssen zweikanalig ausgeführt ist. Dies kann dadurch erreicht werden, dass ein analoges Eingangssignal bereits an den Eingangsanschlüssen der Eingangseinrichtung mittels einer geeignet ausgebildeten Messeinrichtung gemessen und in Eingangsteilsignale vorbestimmbarer Größe aufgeteilt wird, wobei jedes Eingangsteilsignal einem ersten bzw. zweiten Kanal zugeführt wird. Auf diese Weise kann nicht nur die Funktionsfähigkeit der Messeinrichtung, sondern, falls vorhanden, auch die Funktionsfähigkeit eines eingangsseitig angeschlossenen EMV-Filters und/oder weiterer Schutzeinrichtungen überwacht werden, indem zwei Messwerte bezüglich des Eingangssignal gewonnen und ausgewertet werden.

An dieser Stelle sei erwähnt, dass es sich bei der Sicherheitsvorrichtung beispielsweise um eine speicherprogrammierbare Steuerung oder um eine Baugruppe handeln kann, die beispielsweise Bestandteil einer speicherprogrammierbaren Steuerung ist.

Die analoge Eingangseinrichtung bzw. Eingangsschaltungsanordnung kann auch als analoges Eingangsmodul oder analoge Eingabebaugruppe bezeichnet werden.

Ferner sei angemerkt, dass es sich bei den analogen Eingangssignalen vorzugsweise um analoge Sensorsignale handelt.

Die oben genannte technische Aufgabe wird zum Einen durch die Merkmale des Anspruchs 1 gelöst.

Danach ist eine Sicherheitsvorrichtung zum mehrkanaligen Verarbeiten wenigstens eines analogen Eingangssignals vorgesehen, welche eine erste Eingangseinrichtung aufweist, die zum Empfangen eines ersten analogen Eingangssignals ausgebildet ist. Die erste Eingangseinrichtung weist wenigstens einen ersten und zweiten Kanal sowie eine Messeinrichtung auf, die zum Messen und vorbestimmten Aufteilen des ersten analogen Eingangssignals in ein erstes und zweites Teilsignale ausgebildet ist, wobei das erste Teilsignal dem ersten Kanal und das zweite Teilsignal dem zweiten Kanal zugeführt wird. Eine mit dem ersten und zweiten Kanal verbindbare, mehrkanalige Auswerte- und Steuereinrichtung kann dazu ausgebildet sein, unter Ansprechen auf das erste und zweite Teilsignal die Funktionsfähigkeit der ersten Eingangseinrichtung, und zwar bereits ab den Eingangsanschlüssen zu überwachen.

Dies wird insbesondere durch die speziell ausgebildete Messeinrichtung erreicht, die das analoge Eingangsignal unmittelbar am Eingang misst und in vorbestimmbarerer Weise auf zwei Kanäle aufteilt. Die Messeinrichtung fungiert somit auch als eine Eingangssignal-Aufteilungseinrichtung.

Um einen fehlerhaften Kanal lokalisieren und den Betrieb der Sicherheitsvorrichtung mithilfe des fehlerfreien Kanals aufrecht erhalten zu können, kann eine zweite Eingangseinrichtung implementiert sein, die zum Empfangen eines zweiten analogen Eingangssignals ausgebildet ist. Die zweite Eingangseinrichtung weist vorzugsweise wenigstens einen ersten und zweiten Kanal sowie eine Messeinrichtung auf, welche zum Messen und vorbestimmten Aufteilen des zweiten analogen Eingangssignals in ein erstes und zweites Teilsignal ausgebildet ist, wobei das erste Teilsignal dem ersten Kanal und das zweite Teilsignal dem zweiten Kanal der zweiten Eingangseinrichtung zugeführt wird. Die mehrkanalige Auswerte- und Steuereinrichtung ist mit dem ersten und zweiten Kanal der zweiten Eingangseinrichtung verbindbar und dazu ausgebildet, in Abhängigkeit vom ersten und zweiten Teilsignal der ersten anlogen Eingangseinrichtung sowie in Abhängigkeit vom ersten und zweiten Teilsignal der zweiten analogen Eingangseinrichtung einen fehlerhaften ersten oder zweiten Kanal zu lokalisieren und je nach Implementierung dafür zu sorgen, dass der Betrieb der Sicherheitsvorrichtung über den fehlerfreien Kanal ohne Unterbrechung fortgeführt werden kann. Mit anderen Worten ausgedrückt, liefern die beiden zweikanalig ausgeführten Eingangseinrichtungen vier Messwerte für die Auswerte- und Steuereinrichtung.

Die Auswerte- und Steuereinrichtung kann auch dazu ausgebildet sein, in Abhängigkeit vom ersten Teilsignal und zweiten Teilsignal, welche über den ersten bzw. zweiten Kanal der zweiten Eingangseinrichtung übertragen werden, die Funktionsfähigkeit der zweiten Eingangseinrichtung zu überwachen.

Vorteilhafter Weise kann die mehrkanalige Auswerte- und Steuereinrichtung dazu ausgebildet sein, aus dem über den ersten Kanal der ersten Eingangseinrichtung empfangenen Teilsignal und/oder aus dem über den zweiten Kanal der ersten Eingangseinrichtung empfangenen Teilsignal den zum ersten analogen Eingangssignal gehörenden Messwert zu berechnen. Falls eine zweite Eingangseinrichtung implementiert ist, kann die mehrkanalige Auswerte- und Steuereinrichtung dazu ausgebildet sein, aus dem über den ersten Kanal der zweiten Eingangseinrichtung empfangenen Teilsignal und/oder aus dem über den zweiten Kanal der zweiten Eingangseinrichtung empfangenen Teilsignal den zum zweiten analogen Eingangssignal gehörenden Messwert zu berechnen. Angemerkt sei, dass zur Berechnung des Messwertes eines der beiden Teilsignale bereits ausreicht, da das Teilungsverhältnis der beiden Teilsignale bekannt ist.

Die Messeinrichtung der ersten Eingangseinrichtung und, wenn implementiert, der zweiten Eingangseinrichtung kann jeweils einen passiven Spannungsteiler enthalten, der symmetrisch oder unsymmetrisch dimensioniert ist. Bei einer unsymmetrischen Dimensionierung der Widerstände des Spannungsteilers sind die Teilsignale des zu messenden Eingangssignals in dem ersten und zweiten Kanal unterschiedlich. Dadurch können gemäß der Sicherheitsnorm 61508 Common Cause Fehler vermieden oder reduziert werden.

Die erste Eingangseinrichtung und, wenn vorhanden, die zweite Eingangseinrichtung können jeweils ein EMV-Filter enthalten, dessen Funktionsfähigkeit dank der zweikanaligen Ausführung der Eingangseinrichtungen ebenfalls überwacht werden kann.

Zweckmäßiger Weiser sind im ersten und zweiten Kanal der ersten Eingangseinrichtung und, wenn vorhanden, im ersten und zweiten Kanal der zweiten Eingangseinrichtung jeweils eine Entkopplungseinrichtung angeordnet.

Bei mehreren Eingangseinrichtungen kann eine kompakte und einfache Verschaltung der Kanäle mit der Auswerte- und Steuereinrichtung dadurch erreicht werden, dass der erste Kanal der ersten Eingangseinrichtung oder der erste Kanal der zweiten Eingangseinrichtung mittels einer ersten Schalteinrichtung mit einem ersten Eingang der Auswerte- und Steuereinrichtung verbindbar ist, und dass der zweite Kanal der ersten Eingangseinrichtung oder der zweite Kanal der zweiten Eingangseinrichtung mittels einer zweiten Schalteinrichtung mit einem zweiten Eingang der Auswerte- und Steuereinrichtung verbindbar ist. Die Schalteinrichtungen sind vorzugsweise analoge Multiplexer.

Verarbeitet die Auswerte- und Steuereinrichtung digitale Signale, ist zwischen der ersten Schalteinrichtung und dem ersten Eingang der Auswerte- und Steuereinrichtung ein erster A/D-Wandler und zwischen der zweiten Schalteinrichtung und dem zweiten Eingang der Auswerte- und Steuereinrichtung ein zweiter A/D-Wandler geschaltet.

Um in einfacher und kostengünstiger Weise auch die Funktionsfähigkeit der A/D-Wandler überprüfen zu können, kann eine einzige Testeinrichtung vorgesehen sein, die ausgangseitig jeweils mit einem Eingang der ersten und zweiten Schalteinrichtung und eingangsseitig mit der Auswerte- und Steuereinrichtung verbunden ist, wobei der Ausgang der Testeinrichtung mittels der ersten Schalteinrichtung mit dem ersten A/D-Wandler und mittels der zweiten Schalteinrichtung mit dem zweiten A/D-Wandler verbindbar ist. In diesem Fall kann die Auswerte- und Steuereinrichtung dazu ausgebildet sein, die durch die Testeinrichtung hervorgerufenen Testergebnisse auszuwerten, um insbesondere einen fehlerhaften A/D-Wandler aufzudecken bzw. zu erkennen.

Die Auswerte- und Steuereinrichtung kann zum Ansteuern der Testeinrichtung und der ersten und zweiten Schalteinrichtung ausgebildet sein.

Zweckmäßiger Weise weist die Auswerte- und Steuereinrichtung einen ersten, dem ersten Eingang zugeordneten Mikrokontroller und einen zweiten, dem zweiten Eingang zugeordneten Mikrokontroller auf. Die am ersten Eingang ankommenden Daten können auch dem zweiten Mirkokontroller zugeführt werden, während die am zweiten Eingang ankommenden Daten auch dem ersten Mikrokontroller zugeführt werden können. Alternativ oder zusätzlich können der erste und zweite Mikrokontroller zum Austauschen von Daten ausgebildet sein. Denkbar ist auch, dass der eine Mikrokontroller als Master und der andere Mikrokontroller als Slave betreibbar ist.

Die Auswerte- und Steuereinrichtung kann ferner zur Kalibrierung der Sicherheitsvorrichtung ausgebildet sein.

Das oben genannte technische Problem kann auch durch die Merkmale des Anspruchs 14 gelöst werden.

Danach ist eine Eingangsschaltungsanordnung insbesondere zum Einsatz in einer Sicherheitsvorrichtung vorgesehen. Die Eingangsschaltungsanordnung umfasst einen analogen Eingang, der zum Empfangen eines analogen Eingangssignals ausgebildet ist, wenigstens einen ersten und zweiten Kanal sowie eine Messeinrichtung, welche zum Messen und vorbestimmten Aufteilen des analogen Eingangssignals in ein erstes und zweites Teilsignale ausgebildet ist, wobei das erste Teilsignal über den ersten Kanal und das zweite Teilsignal über den zweiten Kanal einer Auswerte- und Steuereinrichtung zuführbar sind.

In vorteilhafter Weise weist die Messeinrichtung einen passiven Spannungsteiler auf, der symmetrisch oder unsymmetrisch dimensioniert ist.

Die Erfindung wird nachfolgend anhand zweier Ausführungsbeispiele in Verbindung mit den beiliegenden Figuren näher erläutert. Es zeigen:
- Fig. 1: eine beispielhafte Sicherheitsvorrichtung mit zwei erfindungsgemäßen Eingangseinrichtungen, an welche jeweils ein Sensor angeschlossen werden kann,
- Fig. 2: einen beispielhaften, detaillierten Aufbau der in Fig. 1 gezeigten ersten Eingangseinrichtung, und
- Fig. 3: einen beispielhaften, detaillierten Aufbau der in Fig. 1 gezeigten zweiten Eingangseinrichtung.

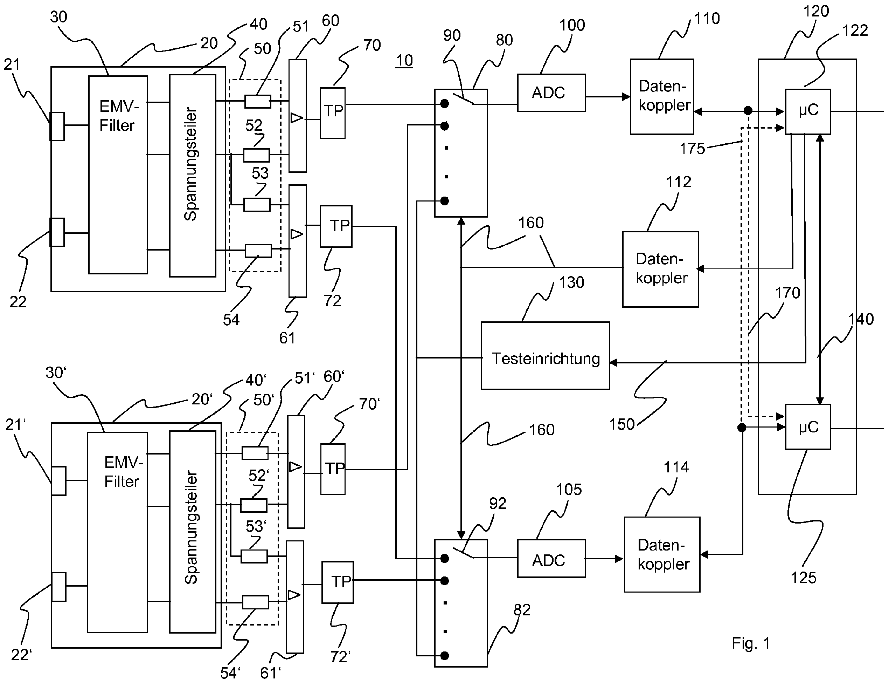

Fig. 1 zeigt eine beispielhafte Sicherheitsvorrichtung 10, die eine speicherprogrammierbare Steuerung oder als Baugruppe einer speicherprogrammierbaren Steuerung ausgebildet sein kann. Die Sicherheitsvorrichtung 10 weist eine erste Eingangseinrichtung 20 auf, die auch als analoges Eingabemodul oder analoge Eingangsschaltung bezeichnet werden kann. Die Eingangseinrichtung 20 weist einen Differenzeingang auf, der durch zwei Eingangsanschlüsse 21 und 22 dargestellt ist. An den Differenzeingang kann ein Zweileiter-Sensor (nicht dargestellt) angeschlossen werden, der ein analoges Eingangssignal liefert, welches an den Eingangsanschlüssen empfangen werden kann. Bei dem Sensor kann es beispielsweise sich um einen Druck- oder Temperatursensor handeln. Der Differenzeingang kann beispielsweise als standardisierte 4mA bis 20 mA-Schnittstelle ausgebildet sein, die zum Empfang von standardisierten elektrischen Strömen im Bereich von 4mA bis 20 mA ausgebildet ist. Die Eingangseinrichtung 20 kann ein EMV-Filter 30 aufweisen, welches mit den Eingangsanschlüssen 21 und 22 verbunden ist.

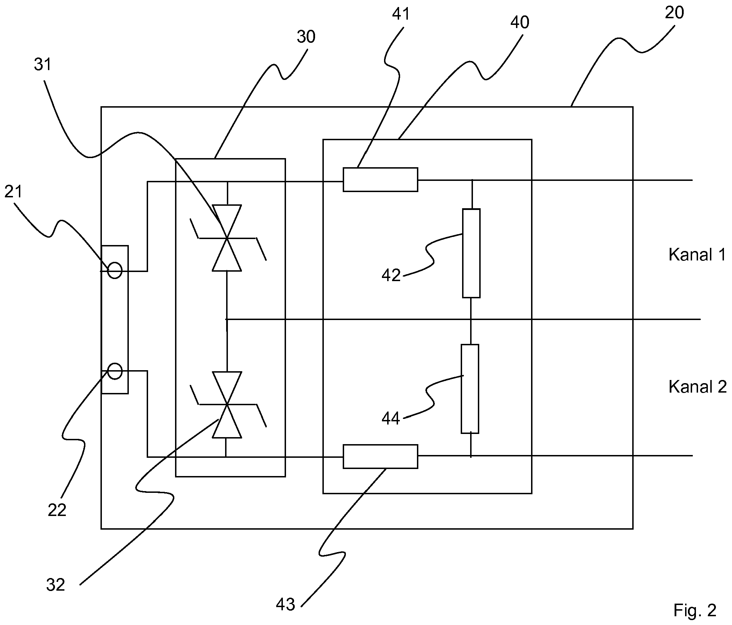

Wie in Fig. 2 gezeigt, kann das EMV-Filter 30 in an sich bekannter Weise zwei Suppressordioden 31 und 32 enthalten. Die Ausgänge des EMV-Filters 30 sind mit einer Messeinrichtung 40 verbunden, deren beispielhafter Aufbau in Fig. 2 näher dargestellt ist. Die Messeinrichtung 40 weist einen Spannungsteiler auf, der zwei Messwiderstände 42 und 44, die in vorbestimmter Weise dimensioniert sind, enthalten kann. Die Messwiderstände 42 und 44 können symmetrisch oder unsymmetrisch dimensioniert sein. Werden die Messwiderstände 42 und 44 unsymmetrisch dimensioniert, kann eine gezielte Diverstität in die Messwerte eingeführt werden, da die Teilsignale bzw. Messsignale in den Kanälen 1 und 2 unterschiedlich sind. Dadurch kann die Wahrscheinlichkeit, dass Common Cause Fehler auftreten, deutlich reduziert werden. Die gemeinsame Verbindungsstelle der Suppressordioden 31 und 32 ist mit der gemeinsamen Verbindungsstelle der Messwiderstände 42 und 44 verbunden. Der Spannungsteiler 42, 44 hat die Aufgabe, das an den Eingangsanschlüssen 21 und 22 anliegende Eingangssignal zu messen und in zwei Teilsignale, deren Größenverhältnis durch den Spannungsteiler festgelegt ist, aufzuteilen. Der Spannungsteiler 42, 44 sorgt dafür, dass die Eingangseinrichtung 20 bereits ab den Eingangsanschlüssen 21 und 22 zweikanalig, d. h. durch einen Kanal 1 und einen Kanal 2, ausgebildet ist. Der Kanal 1 wird durch die Suppressordiode 31, den Signalanpassungswiderstand 41 und den Messwiderstand 42 gebildet, während Kanal 2 durch die Suppressordiode 32, den Signalanpassungswiderstand 43 und den Messwiderstand 44 gebildet wird. Dank der speziellen Ausführung der Eingangseinrichtung 20, die bereits ab den Eingangsanschlüssen 21 und 22 in die wenigstens zwei Kanäle 1 und 2 aufgeteilt wird, kann das analoge Eingangsignal in entsprechender Weise in beiden Kanälen gemessen werden. Dadurch ist es möglich die Funktionsfähigkeit der gesamten Eingangseinrichtung 20, d. h. die Funktionsfähigkeit des Differenzeingangs 21, 22, die Funktionsfähigkeit der Supressordioden 31 und 32 und die Funktionsfähigkeit der Messwiderstände 42 und 44 mittels einer entsprechend ausgebildeten Auswerte- und Steuereinrichtung 120 zu überwachen und gegebenenfalls fehlerhafte Komponenten zu erkennen.

Weiterhin kann eine passive Signalanpassungseinrichtung vorgesehen sein, welche die Widerstände 41 und 43 umfasst, um dass Eingangssignal zu reduzieren. Der Widerstand 41 ist zwischen den Eingangsanschluss 21 und einen Anschluss des Messwiderstands 42 geschaltet, während der Widerstand 43 zwischen den Eingangsanschluss 22 und einem Anschluss des Messwiderstands 44 geschaltet ist. Auch die Funktionsfähigkeit der Signalanpassungswiderstände 41 und 43 kann überwacht werden.

Der Messeinrichtung 40 kann eine Entkopplungseinrichtung 50 nachgeschaltet sein, die vier Widerstände 51 bis 54 enthalten kann. Die Entkopplungseinrichtung 50 ist in der Lage zu verhindern, dass sich die beiden Kanäle 1 und 2 gegenseitig beeinträchtigen. Hierzu kann der Widerstand 51 eingangsseitig mit einem Anschluss des Messwiderstandes 41 und ausgangsseitig mit dem ersten Eingang eines Differenzverstärkers 60 verbunden sein. Der Widerstand 52 ist eingangsseitig mit der gemeinsamen Verbindungsstelle der Messwiderstände 42, 44 und ausgangsseitig mit dem zweiten Eingang des Differenzverstärkers 60 verbunden. Damit gehören sowohl die Widerstände 51 und 52 als auch der Differenzverstärker 60 zum Kanal 1. Der Widerstand 54 ist eingangsseitig mit einem Anschluss des Messwiderstandes 44 und ausgangsseitig mit dem ersten Eingang eines Differenzverstärkers 61 verbunden. Der Widerstand 53 ist eingangsseitig mit der gemeinsamen Verbindungsstelle der Messwiderstände 42, 44 und ausgangsseitig mit dem zweiten Eingang des Differenzverstärkers 61 verbunden. Damit gehören sowohl die Widerstände 53 und 54 als auch der Differenzverstärker 61 zum Kanal 2. Der Ausgang des Differenzverstärkers 60 kann in an sich bekannter Weise mit einem Tiefpassfilter 70 verbunden sein, welcher ebenfalls zum Kanal 1 gehört. Der Ausgang des Differenzverstärkers 61 kann mit einem Tiefpassfilter 72 verbunden sein, welcher zu Kanal 2 gehört. Angemerkt sei, dass je nach Implementierung auch die Entkopplungseinrichtung 50, die Differenzverstärker 60 und 61 und die Tiefpassfilter 70 und 72 innerhalb der Eingangseinrichtung angeordnet sein können. Die Differenzverstärker 60 und 61 sorgen jeweils für eine Signalanpassung, indem sie das jeweilige Eingangsdifferenzsignal in ein massebezogenes Signal umwandeln, welches vom A/D-Wandler 100 bzw. vom A/D-Wandler 105 verarbeitet werden kann.

Der Ausgang des Tiefpassfilters 70 ist mit dem ersten Eingang einer Schalteinrichtung 80 verbunden, welche vorzugsweise als analoger Multiplexer ausgebildet ist. Der analoge Multiplexer 80 wird durch einen drehbaren Schalter 90 symbolisiert. Auf diese Weise kann Kanal 1 mittels des analogen Multiplexers 80 mit einem nachgeschalteten A/D-Wandlers 100 gezielt verbunden werden.

In ähnlicher Weise kann der Ausgang des Tiefpassfilters 72 mit dem ersten Eingang einer Schalteinrichtung 82 verbunden sein, welche vorzugsweise als analoger Multiplexer ausgebildet ist. Der analoge Multiplexer 82 wird durch einen drehbaren Schalter 92 symbolisiert. Auf diese Weise kann Kanal 2 mittels des analogen Multiplexers 82 mit einem nachgeschalteten A/D-Wandlers 105 gezielt verbunden werden.

Die Sicherheitsvorrichtung 10 kann, wie in Fig. 1 gezeigt, wenigstens eine zweite Eingangseinrichtung 20' aufweisen, die ähnlich wie die Eingangseinrichtung 20 aufgebaut sein kann.

Die Eingangseinrichtung 20' weist einen Differenzeingang auf, der durch zwei Eingangsanschlüsse 21' und 22' dargestellt ist. An den Differenzeingang kann ein Zweileiter-Sensor (nicht dargestellt) angeschlossen werden, der ein analoges Eingangssignal liefert, welches an den Eingangsanschlüssen empfangen werden kann. Bei dem Sensor kann es sich beispielsweise um einen Druck- oder Temperatursensor handeln. Der Differenzeingang kann beispielsweise als standardisierte 4mA bis 20 mA-Schnittstelle ausgebildet sein, die zum Empfang von standardisierten elektrischen Strömen im Bereich von 4mA bis 20 mA ausgebildet ist. Die Eingangseinrichtung 20 kann ein EMV-Filter 30' aufweisen, welches mit Eingangsanschlüssen 21' und 22' verbunden ist.

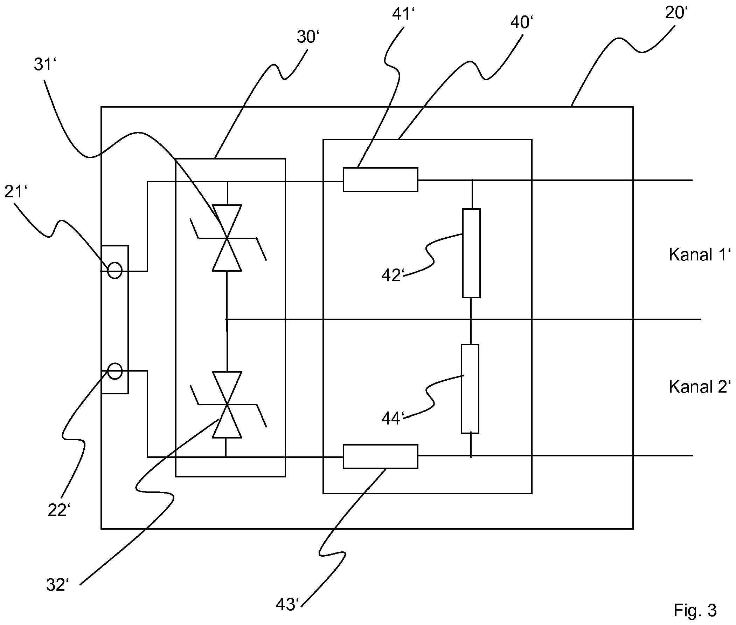

Wie in Fig. 3 gezeigt, kann das EMV-Filter 30' in an sich bekannter Weise zwei Suppressordioden 31' und 32' enthalten. Die Ausgänge des EMV-Filters 30' sind mit einer Messeinrichtung 40' verbunden, deren beispielhafter Aufbau in Fig. 3 näher dargestellt ist. Die Messeinrichtung 40' weist einen Spannungsteiler auf, der zwei Messwiderstände 42' und 44', die in vorbestimmter Weise dimensioniert sind, enthalten kann. Die Widerstände 42' und 44' können symmetrisch oder unsymmetrisch dimensioniert sein. Die gemeinsame Verbindungsstelle der Suppressordioden 31' und 32' ist mit der gemeinsamen Verbindungsstelle der Messwiderstände 42' und 44' verbunden. Der Spannungsteiler 42', 44' hat die Aufgabe, das an den Eingangsanschlüssen 21' und 22' anliegende Eingangssignal zu messen und in zwei Teilsignale, deren Größenverhältnis durch den Spannungsteiler festgelegt ist, aufzuteilen. Der Spannungsteiler 42', 44' sorgt dafür, dass die Eingangseinrichtung 20' bereits ab den Eingangsanschlüssen 21' und 22' zweikanalig, d. h. durch einen Kanal 1' und einen Kanal 2', ausgebildet ist. Der Kanal 1' wird durch die Suppressordiode 31', den Signalanpassungswiderstand 41' und den Messwiderstand 42' gebildet, während Kanal 2' durch die Suppressordiode 32', den Signalanpassungswiderstand 43' und den Messwiderstand 44' gebildet wird. Dank der speziellen Ausführung der Eingangseinrichtung 20', die bereits ab den Eingangsanschlüssen 21' und 22' in die wenigstens zwei Kanäle 1' und 2' aufgeteilt wird, kann das analoge Eingangsignal in entsprechender Weise in beiden Kanälen gemessen werden. Dadurch ist es möglich die Funktionsfähigkeit der gesamten Eingangseinrichtung 20', d. h. die Funktionsfähigkeit des Differenzeingangs 21', 22', die Funktionsfähigkeit der Supressordioden 31' und 32' und die Funktionsfähigkeit der Messwiderstände 42' und 44' mittels der entsprechend ausgebildeten Auswerte- und Steuereinrichtung 120 zu überwachen und gegebenenfalls fehlerhafte Komponenten zu erkennen. Wird ein Fehler erfasst, kann die Auswert- und Steuereinrichtung 120 veranlassen, dass die Sicherheitsvorrichtung, eine Anlage oder Teile der Anlage in einen sichern Zustand gefahren werden.

Bereits an dieser Stelle sei angemerkt, dass die beiden Eingangseinrichtungen 20 und 20' zur redundanten Messung von Sensorsignalen verwendet werden können. In diesem Fall besteht die Möglichkeit, einen fehlerhaften Kanal zu lokalisieren und den Betrieb der Sicherheitsvorrichtung 10 über den fehlerfreien Kanal aufrecht zu erhalten. Dies wird dadurch erreicht, dass vier Messgrößen, das sind die durch die Messwiderstände 42, 42', 44 und 44' erzeugten vier Teilsignale, in der Auswerte- und Steuereinrichtung 120 zum Beispiel durch einen entsprechenden Vergleich ausgewertet werden können.

Weiterhin kann eine passive Signalanpassungseinrichtung vorgesehen sein, welche die Widerstände 41' und 43' umfasst, um dass Eingangssignal zu reduzieren. Der Widerstand 41' ist zwischen dem Eingangsanschluss 21' und einem Anschluss des Messwiderstands 42' angeschlossen, während der Widerstand 43' zwischen dem Eingangsanschluss 22' und einem Anschluss des Messwiderstands 44' geschaltet ist. Auch die Funktionsfähigkeit der Signalanpassungswiderstände 41' und 43' kann überwacht werden.

Der Messeinrichtung 40' kann eine Entkopplungseinrichtung 50' nachgeschaltet sein, die vier Widerstände 51' bis 54' enthalten kann. Der Widerstand 51 ist eingangsseitig mit einem Anschluss des Messwiderstandes 41' und ausgangsseitig mit dem ersten Eingang eines Differenzverstärkers 60' verbunden. Der Widerstand 52' ist eingangsseitig mit der gemeinsamen Verbindungsstelle der Messwiderstände 42', 44' und ausgangsseitig mit dem zweiten Eingang des Differenzverstärkers 60' verbunden. Damit gehören sowohl die Widerstände 51' und 52' als auch der Differenzverstärker 60' zum Kanal 1'. Der Widerstand 54' ist eingangsseitig mit einem Anschluss des Messwiderstandes 44' und ausgangsseitig mit dem ersten Eingang eines Differenzverstärkers 61' verbunden. Der Widerstand 53' ist eingangsseitig mit der gemeinsamen Verbindungsstelle der Messwiderstände 42', 44' und ausgangsseitig mit dem zweiten Eingang des Differenzverstärkers 61' verbunden. Damit gehören sowohl die Widerstände 53' und 54' als auch der Differenzverstärker 61' zum Kanal 2'. Der Ausgang des Differenzverstärkers 60' kann in an sich bekannter Weise mit einem Tiefpassfilter 70' verbunden sein, welcher ebenfalls zum Kanal 1' gehört. Der Ausgang des Differenzverstärkers 61' kann mit einem Tiefpassfilter 72' verbunden sein, welcher zu Kanal 2' gehört. Angemerkt sei, dass je nach Implementierung auch die Entkopplungseinrichtung 50', die Differenzverstärker 60' und 61' und die Tiefpassfilter 70' und 72' innerhalb der Eingangseinrichtung 20' angeordnet sein können. Die Differenzverstärker 60' und 61' sorgen jeweils für eine Signalanpassung, indem sie das jeweilige Eingangsdifferenzsignal in ein massebezogenes Signal umwandeln, welches vom A/D-Wandler 100 bzw. vom A/D-Wandler 105 verarbeitet werden kann.

Der Ausgang des Tiefpassfilters 70' ist mit dem zweiten Eingang des analogen Multiplexers 80 verbunden. Auf diese Weise kann Kanal 1' mittels des analogen Multiplexers 80 mit dem nachgeschalteten A/D-Wandler 100 gezielt verbunden werden.

In ähnlicher Weise ist der Ausgang des Tiefpassfilters 72' mit dem zweiten Eingang des analogen Multiplexers 82 verbunden. Auf diese Weise kann Kanal 2' mittels des analogen Multiplexers 82 mit dem nachgeschalteten A/D-Wandler 105 gezielt verbunden werden.

Der A/D-Wandler 100 wandelt in an sich bekannter Weise die über den ersten Kanal 1 der Eingangseinrichtung 20 kommenden analogen Teilsignale oder die über den ersten Kanal 1' der Eingangseinrichtung 20' kommenden analogen Teilsignale in digitale Signale um. Der A/D-Wandler 100 kann unmittelbar oder zur Potentialtrennung über einen Datenkoppler 110 mit der Auswerte- und Steuereinrichtung 120 verbunden sein. Der Datenkoppler 110 kann als Optokoppler ausgebildet sein.

Der A/D-Wandler 105 wandelt in an sich bekannter Weise die über den zweiten Kanal 2 der Eingangseinrichtung 20 kommenden analogen Teilsignale oder die über den zweiten Kanal 2' der Eingangseinrichtung 20' kommenden analogen Teilsignale in digitale Signale um. Der A/D-Wandler 105 kann unmittelbar oder zur Potentialtrennung über einen Datenkoppler 114 mit der Auswerte- und Steuereinrichtung 120 verbunden sein. Der Datenkoppler 114 kann als Optokoppler ausgebildet sein.

Die Auswerte- und Steuereinrichtung 120 weist einen dem Kanal 1 oder Kanal 1' zugeordneten ersten Eingang auf, dem ein Mikrokontroller oder Mikroprozessor 122 zugeordnet ist. Mit anderen Worten wird jeweils der erste Kanal der Eingangseinrichtungen 20 und 20' und somit das über den jeweiligen ersten Kanal übertragene Teilsignal über die Schalteinrichtung 80 dem Mikrokontroller oder Mikroprozessor 122 zugeführt. Der Mikrokontroller 122 ist dazu ausgebildet, die Daten des über den ersten Kanal 1 der Eingangseinrichtung 20 übertragenen Teilsignals oder die Daten des über den ersten Kanal 1' der Eingangseinrichtung 20' übertragenen Teilsignals zu empfangen und in vorgegebener Weise auszuwerten.

In Abhängigkeit von der Anzahl verwendeter Eingangseinrichtungen kann die Schalteinrichtung 80 auch mehr als einen Multiplexer aufweisen, wobei jedem Multiplexer eine separate Gruppe von Eingangseinrichtungen zugeordnet ist. Auf diese Weise kann jeder Multiplexer der Schalteinrichtung 80 den ersten Kanal jeder Eingangseinrichtung der jeweiligen Gruppe, vorzugsweise über einen separaten AD-Wandler und einen separaten Datenkoppler, dem Mikrokontroller 122 zuführen. Um die Verarbeitungsgeschwindigkeit der Auswerte- und Steuereinrichtung 120 zu erhöhen, können die über die Multiplexer der Schalteinrichtung 80 übertragenen Teilsignale gruppenweise, d.h. parallel von dem Mikrokontroller 122 empfangen und ausgewertet werden.

Die Auswerte- und Steuereinrichtung 120 weist einen zweiten, dem Kanal 2 oder Kanal 2' zugeordneten Eingang auf, dem ein Mikrokontroller 125 zugeordnet ist. Mit anderen Worten wird jeweils der zweite Kanal der Eingangseinrichtungen 20 und 20' und somit das über den jeweiligen zweiten Kanal übertragene Teilsignal über die Schalteinrichtung 82 dem Mikrokontroller oder Mikroprozessor 125 zugeführt. Der Mikrokontroller 125 ist dazu ausgebildet, die Daten des über den zweiten Kanal 2 der Eingangseinrichtung 20 übertragenen Teilsignals oder die Daten des über den zweiten Kanal 2' der Eingangseinrichtung 20' übertragenen Teilsignals zu empfangen und in vorgegebener Weise auszuwerten. Die beiden Mikrokontroller 122 und 125 sind somit Bestandteil einer zweikanaligen Auswerte- und Steuereinrichtung 120.

In Abhängigkeit von der Anzahl verwendeter Eingangseinrichtungen kann die Schalteinrichtung 82 auch mehr als einen Multiplexer aufweisen, wobei jedem Multiplexer eine separate Gruppe von Eingangseinrichtungen zugeordnet ist. Auf diese Weise kann jeder Multiplexer der Schalteinrichtung 82 den zweiten Kanal jeder Eingangseinrichtung der jeweiligen Gruppe, vorzugsweise über einen separaten AD-Wandler und einen separaten Datenkoppler, dem Mikrokontroller 125 zuführen. Um die Verarbeitungsgeschwindigkeit der Auswerte- und Steuereinrichtung 120 zu erhöhen, können die über die Multiplexer der Schalteinrichtung 82 übertragenen Teilsignale gruppenweise, d.h. parallel von dem Mikrokontroller 125 empfangen und ausgewertet werden.

Um Daten miteinander auszutauschen, können beiden Mikrokontroller 122 und 125 jeweils eine standardisierte SPI-Schnittstelle aufweisen, die über eine Verbindungsleitung 140 Daten miteinander austauschen können.

Die beiden Mikrokontroller 122 und 125 der Auswerte- und Steuereinrichtung 120 können als Master-Slave-Einrichtungen betrieben werden. Beispielsweise fungiert der Mikrokontroller 122 im gezeigten Beispiel als Master und der Mikrokontroller 125 als Slave.

Demzufolge kann ein Ausgang des Mikrokontrollers 122 über einen weiteren Datenkoppler 112 und über eine Verbindung 160 mit einem Eingang des analogen Multiplexers 80 und mit einem weiteren Eingang des analogen Multiplexers 82 verbunden sein. Über die Verbindung 160 kann der Mikrokontroller 122 Steuersignale zu beiden Schalteinrichtung 80 und 82 übertragen, um den Schalter 90 bzw. 92 entsprechend anzusteuern. Die Schalter 90 und 92 werden vorzugsweise derart angesteuert, dass die über den Kanal 1 und den Kanal 2 der Eingangseinrichtung 20 übertragenen Teilsignale oder die über den Kanal 1' und den Kanal 2' der Eingangseinrichtung 20' übertragenen Teilsignale parallel und zeitgleich der Auswerte- und Steuereinrichtung 120 zugeführt werden. Dadurch kann der Datenabgleich zwischen den Mikrokontrollern 122 und 125 beschleunigt werden. Zudem können auch sehr dynamische Eingangssignale erfasst und ausgewertet werden.

Weiterhin kann die Sicherheitsvorrichtung 10 eine Testeinrichtung 130 enthalten, die eingangsseitig mit dem als Master fungierenden Mikrokontroller 122 verbunden sein kann. Der Ausgang der Testeinrichtung 130 ist an einen weiteren Eingang der Schalteinrichtung 80 und an einen weiteren Eingang der Schalteinrichtung 82 angeschlossen. Die Testeinrichtung 130 kann somit gezielt zu Testzwecken mit den A/D-Wandlern 100 und 105 verbunden werden. Die Testeinrichtung 130 ist dazu ausgebildet, unter Steuerung des Mikrokontrollers 122 definierte Testsignale zu erzeugen. Beispielsweise kann die Testeinrichtung 130 von der Auswerte- und Steuereinrichtung 120 aufgefordert werden, Testsignale über die Schalteinrichtung 80 dem A/D-Wandler 100 und über die Schalteinrichtung 82 dem A/D-Wandler 105 zuführen, mit welchen der gesamte Wertebereich der A/D-Wandler getestet werden kann. Hierzu werden die von den A/D-Wandlern 100 und 105 unter Ansprechen auf die Testsignal erzeugten Ausgangssignale dem Mikrokontroller 122 bzw. dem Mikrokontroller 125 zugeführt und auf Richtigkeit geprüft.

Die vom Datenkoppler 110 an den ersten Eingang der Auswerte- und Steuereinrichtung 120 übertragenen Daten des Kanals 1 oder des Kanals 1' können, wenn gewünscht, nicht nur dem Mikrokontroller 122, sondern über eine gestrichelt dargestellte Verbindungslinie 170 auch dem Mikrokontroller 125 zugeführt werden. In ähnlicher Weise können die vom Datenkoppler 114 an den zweiten Eingang der Auswerte- und Steuereinrichtung 120 übertragenen Daten des Kanals 2 oder des Kanals 2', wenn gewünscht, nicht nur dem Mikrokontroller 15, sondern über eine gestrichelt dargestellte Verbindungslinie 175 auch dem Mikrokontroller 122 zugeführt werden. Dank dieser Maßnahme können die Mikrokontroller 122 und 15 alle Messgrößen der Eingangseinrichtungen 20 und 20' unabhängig voneinander auswerten, ohne dass zuvor ein Queraustausch von Daten zwischen den Mikrokontrollern 122 und 125 erforderlich ist.

Um die Qualität der Auswerteergebnisse zu erhöhen, können am Ende der Berechnungen die Ergebnisse der beiden Mikrokontroller 122 und 125 miteinander verglichen werden.

Sind die Messwiderstände 42 und 44 der Eingangseinrichtung symmetrisch dimensioniert, dürfen im fehlerfreien Betrieb die beiden Messgrößen, das sind die Teilsignale der Kanäle 1 und 2, nur um einen definierten Toleranzbereich von einander abweichen. Ist die Abweichung zu groß, wird dies durch einen Vergleich von der Auswerte- und Steuereinrichtung 120 erkannt und die Eingangseinrichtung 20, die Sicherheitsvorrichtung 10 oder eine damit verbundene Anlage oder ein damit verbundenes Gerät in einen sicheren Zustand gefahren. Das gilt auch für den Fall, dass die Messwiderstände 42' und 44' der Eingangseinrichtung 20' oder die Messwiderstände beiden Eingangseinrichtungen 20 und 20' symmetrisch dimensioniert sind.

Mit den erläuterten Maßnahmen ist es möglich, nahezu die gesamte Sicherheitsvorrichtung 10, insbesondere von den Eingangsanschlüssen 21, 22 und 21' und 22' bis zu den Mikrokontrollern 122 und 125 auf Fehler zu überwachen.

Die Auswerte- und Steuereinrichtung 120 kann dazu ausgebildet sein, alle Messketten der Sicherheitsvorrichtung 10 zu kalibrieren, indem sie unter Ansprechen auf die empfangenen Daten der jeweiligen Teilsignale eine Kanaldrift in den Kanälen 1 und 2, die jeweils eine Messkette bilden, bzw. in den Kanälen 1' und 2', die jeweils eine Messkette bilden, erkennen und durch Berechnung entsprechender Korrekturwerte kompensieren kann. Eine Kanaldrift kann insbesondere durch die im jeweiligen Kanal verwendeten Widerstände verursacht werden. Die den Kanal 1 bildende Messkette beginnt an den Eingangsanschlüssen 21 und 22 der Eingangseinrichtung 20 und erstreckt sich über das EMV-Filter 30, die Widerstände 51 und 52, den Differenzverstärker 60, die Schalteinrichtung 80, den A/D-Wandler 100 und den Datenkoppler 110 zum Eingang des Mikrocontrollers 122. Die den Kanal 2 bildende Messkette beginnt an den Eingangsanschlüssen 21 und 22 der Eingangseinrichtung 20 und erstreckt sich über das EMV-Filter 30, die Widerstände 53 und 54, den Differenzverstärker 61, die Schalteinrichtung 82, den A/D-Wandler 105 und den Datenkoppler 114 zum Eingang des Mikrocontrollers 125. Die den Kanal 1' bildende Messkette beginnt an den Eingangsanschlüssen 21' und 22' der Eingangseinrichtung 20' und erstreckt sich über das EMV-Filter 30', die Widerstände 51' und 52', den Differenzverstärker 60', die Schalteinrichtung 80, den A/D-Wandler 100 und den Datenkoppler 110 zum Eingang des Mikrocontrollers 122. Die den Kanal 2' bildende Messkette beginnt an den Eingangsanschlüssen 21' und 22' der Eingangseinrichtung 20' und erstreckt sich über das EMV-Filter 30', die Widerstände 53' und 54', den Differenzverstärker 61', die Schalteinrichtung 82, den A/D-Wandler 105 und den Datenkoppler 114 zum Eingang des Mikrocontrollers 125.

## Patentansprüche

1. Sicherheitsvorrichtung (10) zum mehrkanaligen Verarbeiten von wenigstens zwei analogen Eingangssignalen umfassend
- eine erste Eingangseinrichtung (20), die zum Empfangen eines ersten analogen Eingangssignals ausgebildet ist, wobei die erste Eingangseinrichtung (20) wenigstens einen ersten und zweiten Kanal sowie eine Messeinrichtung (40) aufweist, die zum Messen und vorbestimmten Aufteilen des ersten analogen Eingangssignals in ein erstes und zweites Teilsignal ausgebildet ist, wobei das erste Teilsignal dem ersten Kanal und das zweite Teilsignal dem zweiten Kanal zugeführt wird,
- eine mit dem ersten und zweiten Kanal verbindbare Auswerte- und Steuereinrichtung (120), die dazu ausgebildet ist, unter Ansprechen auf das erste Teilsignal und das zweite Teilsignal die Funktionsfähigkeit der ersten Eingangseinrichtung (20) zu überwachen,
- wenigstens eine zweite Eingangseinrichtung (20'), die zum Empfangen eines zweiten analogen Eingangssignals ausgebildet ist, wobei die zweite Eingangseinrichtung (20') wenigstens einen ersten und zweiten Kanal sowie eine Messeinrichtung (40') aufweist, die zum Messen und vorbestimmten Aufteilen des zweiten analogen Eingangssignals in ein erstes und zweites Teilsignal ausgebildet ist, wobei das erste Teilsignal dem ersten Kanal und das zweite Teilsignal dem zweiten Kanal der zweiten Eingangseinrichtung (20') zugeführt wird, wobei die Auswerte- und Steuereinrichtung (120) mit dem ersten und zweiten Kanal der zweiten Eingangseinrichtung (20') verbindbar und dazu ausgebildet ist, unter Ansprechen auf das erste Teilsignal und das zweite Teilsignal des zweiten analogen Eingangsignals die Funktionsfähigkeit der zweiten Eingangseinrichtung (20') zu überwachen,
- eine erste Schalteinrichtung (80) und eine zweite Schalteinrichtung (82), wobei
der erste Kanal der ersten Eingangseinrichtung (20) und der erste Kanal der wenigstens einen zweiten Eingangseinrichtung (20') mittels der ersten Schalteinrichtung (80) mit einem ersten Eingang der Auswerte- und Steuereinrichtung (120) verbindbar ist, und der zweite Kanal der ersten Eingangseinrichtung (20) und der zweite Kanal der wenigstens einen zweiten Eingangseinrichtung (20') mittels der zweiten Schalteinrichtung (82) mit einem zweiten Eingang der Auswerte- und Steuereinrichtung (120) verbindbar ist.

2. Sicherheitsvorrichtung nach Anspruch 1,
**dadurch gekennzeichnet, dass**
die Auswerte- unud Steuereinrichtung (120) dazu ausgebildet ist, in Abhängigkeit vom ersten und zweiten Teilsignal der ersten Eingangseinrichtung (20) und in Abhängigkeit vom ersten und zweiten Teilsignal der zweiten Eingangseinrichtung (20') einen fehlerhaften Kanal zu erkennen.

3. Sicherheitsvorrichtung nach Anspruch 1 oder 2 **dadurch gekennzeichnet, dass**
die Auswerte- und Steuereinrichtung (120) dazu ausgebildet ist, aus dem über den ersten Kanal der ersten Eingangseinrichtung (20) empfangenen Teilsignal und/oder aus dem über den zweiten Kanal der ersten Eingangseinrichtung (20) empfangenen Teilsignal den zum ersten analogen Eingangssignal gehörenden Messwert zu berechnen.

4. Sicherheitsvorrichtung nach einem der Ansprüche 1 bis 3,
**dadurch gekennzeichnet, dass**
die mehrkanalige Auswerte- und Steuereinrichtung (120) dazu ausgebildet ist, aus dem über den ersten Kanal der zweiten Eingangseinrichtung (20') empfangenen Teilsignal und/oder aus dem über den zweiten Kanal der zweiten Eingangseinrichtung (20') empfangenen Teilsignal den zum zweiten analogen Eingangssignal gehörenden Messwert zu berechnen.

5. Sicherheitsvorrichtung nach einem der vorstehenden Ansprüche,
**dadurch gekennzeichnet, dass**
die Messeinrichtung (40) der ersten Eingangseinrichtung und gegebenenfalls die Messeinrichtung (40') der zweiten Eingangseinrichtung (20') jeweils einen passiven Spannungsteiler (42, 44; 42', 44') enthalten, der symmetrisch oder unsymmetrisch dimensioniert ist.

6. Sicherheitsvorrichtung nach einem der vorstehenden Ansprüche,
**dadurch gekennzeichnet, dass**
die erste und gegebenenfalls zweite Eingangseinrichtung (20; 20') jeweils ein EMV-Filter (30; 30') enthalten.

7. Sicherheitsvorrichtung nach einem der vorstehenden Ansprüche,
**dadurch gekennzeichnet, dass**
im ersten und zweiten Kanal der ersten Eingangseinrichtung (20) und gegebenenfalls im ersten und zweiten Kanal der zweiten Eingangseinrichtung (20') jeweils eine Entkopplungseinrichtung (50; 50') angeordnet ist.

8. Sicherheitsvorrichtung nach Anspruch 1,
**dadurch gekennzeichnet, dass**
die Schalteinrichtungen (80, 82) analoge Multiplexer sind.

9. Sicherheitsvorrichtung nach Anspruch 1 oder 8,
**dadurch gekennzeichnet, dass**
zwischen der ersten Schalteinrichtung (80) und dem ersten Eingang der Auswerte- und Steuereinrichtung (120) ein erster A/D-Wandler (100) und zwischen der zweiten Schalteinrichtung (82) und dem zweiten Eingang der Auswerte- und Steuereinrichtung (120) ein zweiter A/D-Wandler (105) geschaltet ist.

10. Sicherheitsvorrichtung nach Anspruch 9,
**gekennzeichnet durch**
eine Testeinrichtung (130), die ausgangseitig jeweils mit einem Eingang der ersten und zweiten Schalteinrichtung (80, 82) und eingangsseitig mit der Auswerte- und Steuereinrichtung (120) verbunden ist, wobei
der Ausgang der Testeinrichtung (130) mittels der ersten Schalteinrichtung (80) mit dem ersten A/D-Wandler (100) und mittels der zweiten Schalteinrichtung (82) mit dem zweiten A/D-Wandler (105) verbindbar ist, wobei
die Auswerte- und Steuereinrichtung (120) dazu ausgebildet ist, die durch die Testeinrichtung (130) hervorgerufenen Testergebnisse auszuwerten.

11. Sicherheitsvorrichtung nach Anspruch 10,
**dadurch gekennzeichnet, dass**
die Auswerte- und Steuereinrichtung (120) zum Ansteuern der Testeinrichtung (130) und der ersten und zweiten Schalteinrichtung (80, 82) ausgebildet ist.

12. Sicherheitsvorrichtung nach einem der Ansprüche 1 bis 11,
**dadurch gekennzeichnet, dass**
die Auswerte- und Steuereinrichtung (120) einen ersten, dem ersten Eingang zugeordneten Mikrokontroller (122) und einen zweiten, dem zweiten Eingang zugeordneten Mikrokontroller (125) aufweist, und/oder dass
die am ersten Eingang ankommenden Daten auch dem zweiten Mirkokontroller (125) und die am zweiten Eingang ankommenden Daten auch dem ersten Mikrokontroller (122) zuführbar sind, und/oder dass der erste und zweite Mikrokontroller (122, 125) zum Austauschen von Daten ausgebildet sind, und/oder dass einer der beiden Mikrokontroller als Master und der andere Mikrokontroller als Slave betreibbar ist.

13. Sicherheitsvorrichtung nach einem der Ansprüche 1 bis 12,
**dadurch gekennzeichnet, dass**
die Auswerte- und Steuereinrichtung (120) zur Kalibrierung der Sicherheitsvorrichtung (10) ausgebildet ist.

## Claims

1. A safety device (10) for multi-channel processing of at least two analogue input signals, comprising
- a first input device (20) adapted to receive a first analogue input signal, wherein the first input device (20) has at least a first and a second channel and a measuring device (40) adapted to measure the first analogue input signal and to divide it in predetermined manner into a first sub-signal and a second sub-signal, the first sub-signal being supplied to the first channel and the second sub-signal being supplied to the second channel;
- an evaluation and control device (120) that can be connected to the first and second channels and which is adapted to monitor the functionality of the first input device (20) in response to the first sub-signal and the second sub-signal;
- at least one second input device (20') adapted to receive a second analogue input signal, wherein the second input device (20') has at least a first and a second channel and a measuring device (40') adapted to measure the second analogue input signal and to divide it in predetermined manner into a first sub-signal and a second sub-signal, the first sub-signal being supplied to the first channel and the second sub-signal being supplied to the second channel of the second input device (20'), wherein the evaluation and control device (120) can be connected to the first and second channels of the second input device (20') and is adapted to monitor the functionality of the second input device (20') in response to the first sub-signal and the second sub-signal of the second analogue input signal;
- a first switching device (80) and a second switching device (82), wherein the first channel of the first input device (20) and the first channel of the at least one second input device (20') can be connected to a first input of the evaluation and control device (120) by means of the first switching device (80), and the second channel of the first input device (20) and the second channel of the at least one second input device (20') can be connected to a second input of the evaluation and control device (120) by means of the second switching device (82).

2. The safety device according to claim 1, **characterized in that**
the evaluation and control device (120) is adapted to detect a faulty channel on the basis of the first and second sub-signals of the first input device (20) and on the basis of the first and second sub-signals of the second input device (20').

3. The safety device according to claim 1 or 2, **characterized in that**
the evaluation and control device (120) is adapted to calculate the measured value associated with the first analogue input signal from the sub-signal received via the first channel of the first input device (20) and/or from the sub-signal received via the second channel of the first input device (20).

4. The safety device according to any one of claims 1 to 3, **characterized in that**
the multi-channel evaluation and control device (120) is adapted to calculate the measured value associated with the second analogue input signal from the sub-signal received via the first channel of the second input device (20') and/or from the sub-signal received via the second channel of the second input device (20').

5. The safety device according to any one of the preceding claims, **characterized in that**
the measuring device (40) of the first input device and optionally the measuring device (40') of the second input device (20') each comprise a passive voltage divider (42, 44; 42', 44') that is dimensioned symmetrically or asymmetrically.

6. The safety device according to any one of the preceding claims, **characterized in that**
the first and optionally the second input device (20; 20') each comprise an EMC filter (30; 30').

7. The safety device according to any one of the preceding claims, **characterized in that**
the first and second channels of the first input device (20) and optionally the first and second channels of the second input device (20') each have a decoupling means (50; 50') arranged therein.

8. The safety device according to claim 1, **characterized in that**
the switching device (80, 82) are analogue multiplexers.

9. The safety device according to claim 1 or 8, **characterized in that**
a first A/D converter (100) is connected between the first switching device (80) and the first input of the evaluation and control device (120), and a second A/D converter (105) is connected between the second switching device (82) and the second input of the evaluation and control device (120).

10. The safety device according to claim 9, **characterized by** a test device (130) that is connected to an input of each of the first and second switching devices (80, 82) on its output side and to the evaluation and control device (120) on its input side; wherein
the output of the test device (130) can be connected to the first A/D converter (100) by means of the first switching device (80) and to the second A/D converter (105) by means of the second switching device (82); wherein
the evaluation and control device (120) is adapted to evaluate the test results produced by the test device (130).

11. The safety device according to claim 10, **characterized in that**
the evaluation and control device (120) is adapted to control the test device (130) and the first and second switching devices (80, 82).

12. The safety device according to any one of claims 1 to 11, **characterized in that**
the evaluation and control device (120) has a first microcontroller (122) associated with the first input and a second microcontroller (125) associated with the second input; and/or that
the data arriving at the first input can also be fed to the second microcontroller (125) and the data arriving at the second input can also be fed to the first microcontroller (122); and/or that
the first and second microcontrollers (122, 125) are adapted to exchange data; and/or that
one of the two microcontrollers is operable as a master and the other microcontroller as a slave.

13. The safety device according to any one of claims 1 to 12, **characterized in that**
the evaluation and control device (120) is adapted for calibrating the safety device (10).

## Revendications

1. Dispositif de sécurité (10) pour le traitement multicanal d'au moins deux signaux d'entrée analogiques comprenant
- un premier équipement d'entrée (20) qui est conçu pour la réception d'un premier signal d'entrée analogique, où le premier équipement d'entrée (20) présente au moins un premier et un deuxième canal ainsi qu'un équipement de mesure (40) qui est conçu pour la mesure et la division prédéterminée du premier signal d'entrée analogique en un premier et second signal partiel, où le premier signal partiel est amené au premier canal et le second signal partiel est amené au deuxième canal,
- un équipement d'exploitation et de commande (120) raccordable au premier et au deuxième canal, qui est conçu pour surveiller la capacité de fonctionnement du premier équipement d'entrée (20) en réaction au premier signal partiel et au second signal partiel,
- au moins un deuxième équipement d'entrée (20') qui est conçu pour la réception d'un second signal d'entrée analogique, où le deuxième équipement d'entrée (20') présente au moins un premier et un deuxième canal ainsi qu'un équipement de mesure (40') qui est conçu pour la mesure et la division prédéterminée du second signal d'entrée analogique en un premier et second signal partiel, où le premier signal partiel est amené au premier canal et le second signal partiel est amené au deuxième canal du deuxième équipement d'entrée (20'), où l'équipement d'exploitation et de commande (120) est raccordable au premier et au deuxième canal du deuxième équipement d'entrée (20') et est conçu pour surveiller la capacité de fonctionnement du deuxième équipement d'entrée (20') en réaction au premier signal partiel et au second signal partiel du second signal d'entrée analogique,
- un premier équipement de commutation (80) et un second équipement de commutation (82), où
le premier canal du premier équipement d'entrée (20) et le premier canal de l'au moins un deuxième équipement d'entrée (20') est raccordable au moyen du premier équipement de commutation (80) à une première entrée de l'équipement d'exploitation et de commande (120), et le deuxième canal du premier équipement d'entrée (20) et le deuxième canal de l'au moins un deuxième équipement d'entrée (20') est raccordable au moyen du second équipement de commutation (82) à une seconde entrée de l'équipement d'exploitation et de commande (120).

2. Dispositif de sécurité selon la revendication 1, **caractérisé en ce que** l'équipement d'exploitation et de commande (120) est conçu pour reconnaître un canal défectueux en fonction du premier et du second signal partiel du premier équipement d'entrée (20) et en fonction du premier et du second signal partiel du deuxième équipement d'entrée (20').

3. Dispositif de sécurité selon la revendication 1 ou 2, **caractérisé en ce que** l'équipement d'exploitation et de commande (120) est conçu pour calculer la valeur mesurée appartenant au premier signal d'entrée analogique à partir du signal partiel reçu via le premier canal du premier équipement d'entrée (20) et/ou à partir du signal partiel reçu via le deuxième canal du premier équipement d'entrée (20).

4. Dispositif de sécurité selon l'une des revendications 1 à 3, **caractérisé en ce que** l'équipement d'exploitation et de commande (120) multicanal est conçu pour calculer la valeur mesurée appartenant au second signal d'entrée analogique à partir du signal partiel reçu via le premier canal du deuxième équipement d'entrée (20') et/ou à partir du signal partiel reçu via le deuxième canal du deuxième équipement d'entrée (20').

5. Dispositif de sécurité selon l'une des revendications précédentes, **caractérisé en ce que** l'équipement de mesure (40) du premier équipement d'entrée et le cas échéant l'équipement de mesure (40') du deuxième équipement d'entrée (20') contiennent respectivement un diviseur de tension passif (42, 44 ; 42', 44') qui est dimensionné symétriquement ou asymétriquement.

6. Dispositif de sécurité selon l'une des revendications précédentes, **caractérisé en ce que** le premier et le cas échéant le deuxième équipement d'entrée (20 ; 20') contiennent respectivement un filtre de compatibilité électromagnétique (30 ; 30').

7. Dispositif de sécurité selon l'une des revendications précédentes, **caractérisé en ce que**, dans le premier et le deuxième canal du premier équipement d'entrée (20) et le cas échéant dans le premier et le deuxième canal du deuxième équipement d'entrée (20'), est respectivement agencé un équipement de découplage (50 ; 50').

8. Dispositif de sécurité selon la revendication 1, **caractérisé en ce que** les équipements de commutation (80, 82) sont des multiplexeurs analogiques.

9. Dispositif de sécurité selon la revendication 1 ou 8, **caractérisé en ce qu'**un premier convertisseur A/N (100) est monté entre le premier équipement de commutation (80) et la première entrée de l'équipement d'exploitation et de commande (120) et un second convertisseur A/N (105) est monté entre le second équipement de commutation (82) et la seconde entrée de l'équipement d'exploitation et de commande (120).

10. Dispositif de sécurité selon la revendication 9, **caractérisé par**
un équipement de test (130) qui est raccordé côté sortie respectivement à une entrée du premier et du second équipement de commutation (80, 82) et côté entrée à l'équipement d'exploitation et de commande (120), où
la sortie de l'équipement de test (130) est raccordable au premier convertisseur A/N (100) au moyen du premier équipement de commutation (80) et au second convertisseur A/N (105) au moyen du second équipement de commutation (82), où
l'équipement d'exploitation et de commande (120) est conçu pour exploiter les résultats de test produits via l'équipement de test (130).

11. Dispositif de sécurité selon la revendication 10, **caractérisé en ce que** l'équipement d'exploitation et de commande (120) est conçu pour commander l'équipement de test (130) et le premier et second équipement de commutation (80, 82).

12. Dispositif de sécurité selon l'une des revendications 1 à 11, **caractérisé en ce que**
l'équipement d'exploitation et de commande (120) présente un premier microcontrôleur (122) affecté à la première entrée et un second microcontrôleur (125) affecté à la seconde entrée, et/ou **en ce que**
les données arrivant à la première entrée peuvent aussi être amenées au second microcontrôleur (125) et les données arrivant à la seconde entrée peuvent aussi être amenées au premier microcontrôleur (122), et/ou **en ce que**
le premier et le second microcontrôleur (122, 125) est conçu pour l'échange de données, et/ou **en ce que**
l'un des deux microcontrôleurs peut être utilisé en tant que maître et l'autre microcontrôleur en tant qu'esclave.

13. Dispositif de sécurité selon l'une des revendications 1 à 12, **caractérisé en ce que** l'équipement d'exploitation et de commande (120) est conçu pour l'étalonnage du dispositif de sécurité (10).
